# EUROPEAN PATENT APPLICATION

(11) **EP 4 582 505 A1**
(43) Date of publication of application: **09.07.2025**
(21) Application number: 24305014.3
(22) Date of filing: 05.01.2024
(51) Int. Cl.: C09J 123/08, C09J 7/21

(54) **A HOT-MELT ADHESIVE COMPOSITION, USE THEREOF AND AN ARTICLE COMPRISING THE SAME**

(71) Applicant: Bostik SA, 92800 Puteaux (FR)
(72) Inventor: YANG, Huaxiao, SHANGHAI, 201108 (CN)
(74) Representative: Arkema Patent

(57) **Abstract**

The invention relates to a hot-melt adhesive composition comprising: (a) an ethylene-based copolymer, (b) a tackifying resin, (c) a modified castor oil, (d) a wax, (e) optional additives, wherein the modified castor oil is characterized as being solid at 25°C, the modified castor oil contains hydrogenated castor oil, the ethylene-based copolymer is a copolymer of ethylene and carboxylic acid ester having an ethylenic double bond, and the hot-melt adhesive composition has a bio-based content of more than 42%, preferably more than 45%, more preferably more than 50%. The invention also relates to an article comprising at least one substrate and the hot-melt adhesive composition, and to a use of the hot-melt adhesive composition.

## Description

### TECHNICAL FIELD

The present invention relates to the field of hot-melt adhesives, especially the hot-melt adhesives for use in book binding. More specifically, the invention relates to a hot-melt adhesive composition which has suitable viscosity, open time for application while maintaining a high bio-based content.

### TECHNICAL BACKGROUND

With the improvement of people's living standards, the requirements of bookbinding are also increasing and wireless binding has become a trend. Hot-melt adhesive has a wide range of applications, e.g., in packaging, booklet binding, etc. It can improve the aesthetics of the book, speed up the book binding processing speed, and thus better adapts to the publication and social needs.

On one hand, various ways are used to improve the traditional hot melt adhesive with low adhesion to avoid the problem of paper peeling. CN104861894B discloses a hot melt adhesive for book binding and the method thereof, the hot melt adhesive is prepared from the following raw materials in accordance with the number of parts by weight, paraffin wax 10-25 parts; ethylene-vinyl acetate copolymer 30-60 parts; terpene 15-25 parts; rosin 5-10 parts; styrene-butadiene rubber 3-5 parts; antioxidant 0.25-0.8 parts; pentaerythritol 10-15 parts; said rosin consists of a mixture of maleic rosin and acrylic-modified rosin in the ratio of 11:4 by weight; said styrene-butadiene rubber is styrene-containing rubber, and said styrene-containing rubber is 3.25 parts.

On the other hand, low-carbon recycling economy has become a global consensus, and bio-based industry is an important part of it. In the future, bio-based replacement of fossil-based products will become a major trend, and it is one of the best way to cope with greenhouse gas emissions. Traditional hot-melt adhesives often have a low bio-based content, e.g. less than 40%. The application properties of hot-melt adhesives may be compromised in order to increase the bio-based content. Therefore, there is still a need to develop hot-melt adhesives with a high biobased content while still retain excellent adhesion to the substrate. Especially when used for bookbinding, a short open time for the adhesive is also required, in order to avoid the problem of adhesive sticking to the knife during the cutting process after bonding.

It has now been found that these aims can be achieved by the composition described below.

### SUMMARY OF THE INVENTION

It has now been found that the composition according to the present application meets these needs. It was found notably that the particular combination according to the present application, comprising a particular ethylene-based copolymer, a particular modified castor oil, a tackifying resin and a wax, preferably at particular contents and ratio, led to a composition having improved viscosity and open time while maintaining a high bio-based content.

In a first aspect, the invention relates to a hot-melt adhesive composition comprising: (a) an ethylene-based copolymer, (b) a tackifying resin, (c) a modified castor oil, (d) a wax, (e) optional additives, wherein
the modified castor oil is characterized as being solid at 25°C and containing hydrogenated castor oil,
the ethylene-based copolymer is a copolymer of ethylene and carboxylic acid ester having an ethylenic double bond, and
the hot-melt adhesive composition has a bio-based content of more than 42%, preferably more than 45%, more preferably more than 50%.

Preferably, the carboxylic acid ester having an ethylenic double bond is selected from vinyl acetate, butyl acrylate and their combination.

Preferably, the ethylene-based copolymer is ethylene-vinyl acetate copolymer (EVA). The EVA contains a first EVA and a second EVA. The first EVA has a melting index of 200 to 600 g/10 min, preferably 300 to 500 g/10 min, and the second EVA has a melting index of 1 to 50 g/10min, preferably 3 to 25 g/10 min.

Preferably, the content of vinyl acetate in the ethylene-based copolymer is 15 to 45 wt%, preferably 20 to 38 wt%.

Preferably, the weight ratio of the first EVA to the second EVA is 3.5 to 22, preferably 5 to 20.

Preferably, the tackifying resin is a biobased tackifying resin, preferably rosin and its derivatives.

Preferably, the hydrogenated castor oil is solid at 25°C.

Preferably, modified castor oil contains more than 90wt%, preferably 95 wt%, more preferably 100 wt% of hydrogenated castor oil based on the total weight of the modified castor oil.

Preferably, the melting point of the hydrogenated castor oil is 65 to 110 °C, preferably 75 to 100 °C, more preferably 80 to 95 °C.

Preferably, the wax contains paraffin wax and FT wax.

Preferably, the hot-melt adhesive composition has one or more of the following features:
the melting point of the hydrogenated castor oil is between the melting point of the paraffin wax and the FT wax,
the melting point of the paraffin wax is 50 to 95 °C, preferably 55 to 80°C, more preferably 60 to 70°C,
the melting point of FT wax is 70 to 140 °C, preferably 80 to 130°C, more preferably 90 to 120°C,
the weight ratio of paraffin wax to FT wax is 0.1 to 10, preferably 0.5 to 5,
the weight ratio of the hydrogenated castor oil to the wax is more than 0.9, preferably 1.2 to 10, more preferably 2 to 6.

Preferably, the hydrogenated castor oil has a hydrogenated degree of more than 85%, preferably more than 90%, more preferably more than 95%_{∘}

Preferably, the hydrogenated castor oil has an iodine value of less than 2.5.

Preferably, based on the total weight of the hot-melt adhesive composition, the hot-melt adhesive composition contains 8 to 25 wt%, preferably 11 to 19 wt% of the modified castor oil.

Preferably, the hot-melt adhesive composition comprises, based on the total weight of the composition:
25 to 55 wt%, preferably 30 to 50 wt% of the ethylene-based copolymer,
20 to 60 wt%. preferably 30 to 50 wt% of the tackifying resin,
8 to 25 wt%, preferably 11 to 19 wt% of the modified castor oil,
1 to 15 wt%, preferably 2 to 10 wt% of the wax,
0 to 10, preferably 0.1 to 5 wt% of the additives.

In a second aspect, the invention relates to use of the hot-melt adhesive composition according to the invention for coating a surface, wherein the surface is a fiber, preferably a fiber for use in producing paper.

Preferably, the invention relates to use of the hot-melt adhesive composition for book binding, preferably as book spine adhesive for book binding.

In a third aspect, the invention relates to an article comprising at least one substrate and the hot-melt adhesive composition according to the invention.

Preferably, the substrate is a fiber, preferably a fiber for use in producing paper.

Preferably, the article is a paper product, preferably a book.

### DESCRIPTION OF THE INVENTION

### General definitions and terms

The invention is further described in detail below, and it is to be understood that the terms are for the purpose of description but not intended to limit the invention.

The technical and scientific terms used herein have the same meaning as commonly understood by one of ordinary skill in the art to which this invention belongs, unless otherwise indicated. In the event of a conflict, the definition provided in this application shall prevail.

As used herein, the singular forms "a," "an," and "the" are intended to include the plural forms as well, unless the context clearly indicates otherwise. For example, "an ethylene-based copolymer" has the same meaning as "at least one ethylene-based copolymer" and "one or more ethylene-based copolymer", unless the context clearly indicates otherwise.

It will be further understood that the terms "comprising", "comprise(s)" as used herein are synonymous with "including", "include(s)" or "containing", "contains". The terms "comprise(s)" and/or "comprising," or "include(s)" and/or "including" when used in this specification, specify the presence of stated features (members, components, method steps or the like), but do not preclude the presence or addition of one or more other non-recited features.

The recitation of numerical ranges by endpoints includes all integer numbers and, where appropriate, fractions subsumed within that range (e.g. 1 to 5 can include 1, 2, 3, 4, 5 when referring to, for example, a number of elements, and can also include, e.g., 1.5, 2, 2.75 and 3.80, when referring to, for example, content). The recitation of numerical ranges by end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

Preferred features and embodiments of the invention are set herein below. Any feature indicated as being preferred or advantageous may be combined with any other feature or features or statements indicated as being preferred or advantageous.

The various groups, radicals and letters which are included in the formulas described in the present application retain throughout the present text the same definition, unless otherwise stated.

The term "optional" or "optionally" as used herein means that the subsequently described event or circumstance may or may not occur. The description includes the occurrence or non-occurrence of the event or circumstance, as well as the arbitrary selection of the subsequently described content.

Unless otherwise indicated, percentages, parts, and the like herein are provided by weight.

The term "one or more" or "at least one", as used herein, means one, two, three, four, five, six, seven, eight or more.

Unless otherwise stated, standards mentioned throughout the present application are those in effect on the date the application is filed.

By "about X", it is intended more or less 10% the value of X.

Viscosity may be measured according to ASTM D3236-15 2021, for example as described in the testing methods of the Examples below.

"Bio-based" is meant herein a raw material, which is derived from the renewable sources (and is not petrol based). By the term "bio-based content" is meant herein for the raw material, the percentage of biological carbon atoms and all carbon atoms in equivalent biological products, e,g, a 100% bio-based content indicates that 100% of the carbon comes from plants or animals living in the natural environment. However, it is noted that the term does not refer to the production process of the materials, only to the source where they are derived from. ASTM D 6866-22 for example is used to determine the bio-based content of the materials.

The softening point may be measured according to ASTM E-28-2018, for example as described in the testing methods of the Examples below.

In this context, the term "melting index" (Ml) is a most common criteria for indicating the flowability of a polymer in a molten state. It could be determined as follows: an amount of a polymer that flows out from a nozzle (orifice) having a prescribed size at a certain pressure and at certain temperature is measured by an extrusion plastometer, and a numerical value in unit of g/10 min is referred to as "melting index". Unless otherwise specified, the melting index as referred to herein is the number of grams of the polymer which flows out in 10 minutes at 190°C under a load of 2.16 kg in accordance with ASTM D 1238-13.

As used herein, unless otherwise specified, melting point could be determined by using differential scanning calorimetry (DSC) in conventional manners, e.g., ISO 11357-1-2009.

The hot-melt adhesive composition according to the invention and the article comprising the same will be described in detail below.

As used herein, the term "copolymer" refers to polymer formed by the polymerization of at least two different monomers.

### Ethylene-based copolymer

The ethylene-based copolymer in the present invention is a copolymer of ethylene and carboxylic acid ester having an ethylenic double bond. The term "carboxylic acid ester having an ethylenic double bond" used herein refers to a carboxylic acid ester having a carbon-carbon double bond that can be polymerized with ethylene. Preferably, carboxylic acid ester having an ethylenic double bond is selected from C3 to C12 carboxylic acid ester having an ethylenic double bond, e.g., methyl (meth)acrylate, ethyl (meth)acrylate, butyl (meth)acrylate, 2-ethylhexyl (meth)acrylate, vinyl acetate, butyl acrylate, and their combinations, more preferably is selected from vinyl acetate, butyl acrylate and their combination, most preferably vinyl acetate.

Preferably, the ethylene-based copolymer is ethylene-vinyl acetate copolymer (EVA), which preferably comprises a vinyl acetate content of 15 to 45 wt%, more preferably of 20 to 38 wt%, e.g., 15, 18, 20, 23, 25, 28, 30, 33, 36, 38 wt%, based on the total weight of said EVA. The vinyl acetate content is typically the weight percentage of units derived from vinyl acetate in the EVA. The vinyl acetate content could be detected by FTIR method derived from ASTM D5594-18A.

The EVA may optionally be modified by methods known in the art (for example grafting, copolymerizing). The ethylene-vinyl acetate copolymer may include ethylene-vinyl acetate copolymer modified with unsaturated carboxylic acid or its derivatives. For example, it includes maleic anhydride modified ethylene-vinyl acetate.

Preferably, the EVA has a melting index of 1 to 600 g/ 10 min. More preferably, at least two groups of EVA are contained with one having a higher melting index and one having a lower melting index. The differentiation of the melting index would be beneficial for the composition having a suitable viscosity.

For example, the EVA contains a first EVA and a second EVA. The first EVA has a melting index of 200 to 600 g/10min, preferably 300 to 500 g/10min, e.g., 200, 250, 300, 350, 400, 450, 500, 550, 600 g/10min. The second EVA has a melting index of 1 to 50 g/10min, preferably 3 to 25 g/10min, e.g., 4, 6, 7, 8, 10, 13, 16, 19, 22, 25, 30, 35, 40, 45, 50 g/10min.

The first and/or the second EVA could contain one or a mixture of several EVAs. For example, the second EVA could be one kind of EVA, or could also be two kinds of EVA having the same melting index, or could be two kinds of EVA having different melting index falling within 1 to 50 g/10min.

Preferably, the weight ratio of the first EVA to the second EVA is more than 3, preferably 3.5 to 30, more preferably 5 to 20, e.g., 5, 6, 7, 8, 9, 10, 11, 12, 14, 16, 18, 19, 20.

Suitable ethylene-based copolymers are commercially available, e.g., ESCORENE^{™} ULTRA EVA series from ExxonMobil, UE653-04, UE 634-04 from USI, Ateva 2842A from CELANESE, EV28400 from LG.

The composition according to the invention comprises 25 to 55 wt%, preferably 30 to 50 wt% of the ethylene-based copolymer based on the total weight of the composition.

### Tackifying resin

The tackifying resin in the present invention is a solid tackifying resin. By "solid tackifying resin", it means a tackifying resin being solid at 25°C and at atmospheric pressure (e.g. 101325 Pa ).

The tackifying resin in the present invention is preferably a biobased tackifying resin. The bio-based content of which is preferably equal to or higher than 85 %, more preferably equal to or higher than 90 %, and even more preferably equal to or higher than 95 %, most preferably it is 100 %.

The biobased tackifying resin may be selected from the group consisting of terpene derivatives, rosin derivatives, and mixtures thereof.

The terpene derivatives typically include polyterpene homopolymers, copolymers of terpene with a diene monomer (for example styrene, methylstyrene, etc), phenolic modified terpene resins. The terpene derivatives typically include the non-hydrogenated, as well as the partially or fully hydrogenated derivatives. For example, polyterpene homopolymers include the non-hydrogenated polyterpene homopolymers, the partially-hydrogenated polyterpene homopolymers and the fully-hydrogenated polyterpene homopolymers.

The rosin derivatives typically include rosins and rosin esters, preferably from a partly or fully hydrogenated rosin and a partly or fully hydrogenated rosin ester, and more preferably from a fully hydrogenated rosin and a fully hydrogenated rosin ester.

The biobased tackifying resin may be chosen from the group consisting of:
--natural and modified rosins such as, for example, gum rosins, wood rosins, tall-oil rosins, distilled rosins, (partially of fully) hydrogenated rosins, dimerized rosins and polymerized rosins;
--glycol, glycerol and pentaerythritol esters of natural and modified rosins, such as, for example, the glycerol esters of pale wood rosin, the glycerol esters of (partially of fully) hydrogenated rosin, the glycerol esters of polymerized rosin, the pentaerythritol esters of pale wood rosin, the pentaerythritol esters of (partially of fully) hydrogenated rosin, the pentaerythritol esters of tall oil rosin and the phenolic modified pentaerythritol esters of rosin;
--polyterpene homopolymers which may result from the polymerization of one or several terpene hydrocarbons, such as for example the monoterpenes known as pinene, for example in the presence of Friedel-Crafts catalysts;
--copolymers of terpene with a diene monomer (for example styrene, methylstyrene, etc);
--phenolic-modified terpene resins such as, for example those resulting from the condensation, in an acidic medium, of a terpene and a phenol;
--and mixtures thereof.

Preferably, the biobased tackifying resin is selected from the rosin and its derivatives, e.g., natural and modified rosins, glycol, glycerol and pentaerythritol esters of natural and modified rosins.

The bio-based tackifying resin may have a Ring and Ball softening point from 70 to 150°C, preferably from 90 to 120°C.

The composition according to the invention preferably comprises 20 to 60 wt%, more preferably 30 to 50 wt%, of the tackifying resin based on the total weight of the composition.

Suitable tackifying resins are commercially available, e.g., KOMOTACOKB100S from Guangzhou KOMO Chemicals CO., LTD., PER-100F from Wu Zhou Sun Shine Forestry & Chemicals, GA-100 from Arakawa.

### Modified castor oil

The modified castor oil refers to the castor oil being modified in chemical manner, e.g., hydrogenation, esterification. The modified castor oil is solid at 25°C in this invention. And generally it is detected at atmospheric pressure (e.g. 101325 Pa ).The modified castor oil contains hydrogenated castor oil.

Preferably, the modified castor oil contains more than 90wt%, preferably 95 wt%, more preferably 98 wt% of hydrogenated castor oil based on the total weight of the modified castor oil. More preferably, the modified castor oil contains 100wt% of the hydrogenated castor oil based on the total weight of the modified castor oil, i.e., the modified castor oil is hydrogenated castor oil.

Preferably, the hydrogenated castor oil is solid at 25°C. And generally it is detected at atmospheric pressure (e.g. 101325 Pa ). It is typically obtained by hydrogenation of castor oil pressed from castor seeds.

Preferably, the hydrogenated castor oil is 100% bio-based.

Preferably, the hydrogenated castor oil has a hydrogenated degree of more than 85%, preferably more than 90%, more preferably more than 95%, e.g., 96%, 97%, 98%, 99%, 100%. The hydrogenated degree could be detected by conventional iodine value method according to GB5532-2008. Preferably, the hydrogenated castor oil has an iodine value of less than 2.5.

Preferably, the hydrogenated castor oil has a melting point of 65 to 110 °C, more preferably 75 to 100 °C, even more preferably 80 to 95 °C.

Preferably, the acid value of the hydrogenated castor oil is less than 2.5, more preferably less than 2 detected according to GB5530-2005.

Preferably, the OH value of the hydrogenated castor oil is more than 150, e.g., 155 to 175, detected according to GB24301-2009.

Preferably, the saponification value of the hydrogenated castor oil is 160 to 200, more preferably 170 to 190, detected according to GB5534-2008.

The composition according to the invention preferably comprises 8 to 25 wt%, preferably 11 to 19 wt% of the modified castor oil based on the total weight of the composition, e.g., 8, 9, 10, 11, 12, 13, 14, 15, 16, 17, 18, 19, 20, 21, 22, 23, 24, 25 wt%. The modified castor oil is beneficial for obtaining a composition with higher bio-based content while maintaining suitable viscosity, adhesion and application properties.

Suitable modified castor oil is commercially available, e.g., Hydrogenated castor oil (HCO) from Guangzhou Panyu Zhongxin Oil Chemical CO., LTD., from Jinan Junteng Chemical Co..

### Wax

The commonly used wax includes but not limited to paraffin wax, Fischer-Tropsch wax, polyethylene wax, polypropylene wax, polyamide wax and the like,

Preferably, the wax contains paraffin waxes, Fischer-Tropsch waxes, or any mixture thereof.

By "*paraffin wax"* is meant a wax derived from crude oil. It generally consists of a complex mixture of hydrocarbons with the following general properties: nonreactive; nontoxic; good water barrier; clean-burning fuel; colorless. Paraffin waxes often contain a large amount of straight-chain hydrocarbons, and can also contain branched hydrocarbons, such as isoparaffins and other branched materials, and cycloalkanes, such as cycloparaffins and other cyclocontaining materials.

Paraffin waxes are characterized by a clearly defined crystal structure. The melting point of paraffin wax is preferably 50 to 95 °C, more preferably 55 to 80°C, even more preferably 60 to 70°C.

By "*Fischer-Tropsch wax (FT wax)"* is meant a wax obtained by the so-called Fischer-Tropsch process. The Fischer-Tropsch process typically includes converting a synthesis gas comprising mainly hydrogen and carbon monoxide to hydrocarbons. The conversion is effected by contacting the synthesis gas with a Fischer-Tropsch catalyst, normally an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture.

Preferably, the melting point of FT wax is 70 to 140 °C, more preferably 80 to 130 °C, even more preferably 90 to 120°C.

Preferably, the weight ratio of the paraffin wax to FT wax is 0.1 to 10, more preferably 0.5 to 5, e.g., 1, 1.5, 2, 2.5, 3, 4, 5.

Preferably, the weight ratio of the hydrogenated castor oil to the wax is more than 0.9, more preferably 1.2 to 10, even more preferably 2 to 6. This ratio could be advantageous for obtaining a composition with a suitable open time and thus facilitates the application.

Preferably, the melting point of the hydrogenated castor oil is chosen to be between the melting point of the paraffin wax and the FT wax.

The composition according to the invention preferably comprises 1 to 15 wt%, more preferably 2 to 10 wt% of the wax based on the total weight of the composition.

Suitable paraffin wax is commercially available, e.g., fully refined paraffin wax 64/66 from Fushun new-mainland trading CO., LTD., 64# paraffin wax from Sinopec.

Suitable FT wax is commercially available, e.g., refined Fischer-Tropsch Wax WL-115 from Shaanxi future cleaning chemicals CO., LTD., FT wax SX105 from Shell.

### Additives

The hot-melt adhesive composition of the invention may comprise one or more other additives. In particular, the additives may comprise one or more selected from the group consisting of antioxidants, fillers, surfactants, colorants, dyes, pigments, ultraviolet light stabilizers, and rheology modifiers.

The antioxidant is preferably incorporated in the hot-melt adhesive composition to help to protect the composition from chemical degradations. Said degradations generally involve the reactions of free radicals, resulting from chain scission catalyzed either by ultraviolet light or heat, with dioxygen. Such degradation is usually manifested by a deterioration in the appearance (browning of color) or other physical properties of the adhesive, and in the performance characteristics of the adhesive. In particular, the antioxidant may protect the hot-melt adhesive composition from the effect of thermal degradation reactions that mainly occur during the manufacturing and application process of the composition, where the composition and its ingredients are typically heated for a long time at high temperature in presence of dioxygen.

Useful antioxidants include for example hindered phenols and sulfur and phosphorus containing phenols. One or more antioxidants may be contained in the composition. The antioxidants are commercially available, for example, it can be CHINOX^{®} 1010 (from Double Bond Chemical Ind. Co., Ltd.), CHINOX^{®} 168 (from DBC).

Typical fillers include talc, calcium carbonate, clay, silica, mica, wollastonite, feldspar, aluminum silicate, alumina, hydrated alumina, glass microspheres, ceramic microspheres and/or thermoplastic microspheres.

The pigment may be an organic and/or inorganic pigment, for example titanium dioxide, titanium chrome yellow.

The composition according to the invention comprises 0 to 10 wt%, preferably 0.1 to 5 wt% of the additives based on the total weight of the composition.

### Process

The hot-melt adhesive composition according to the invention may be prepared by mixing the ethylene-based copolymer, the tackifying resin, the modified castor oil, the wax in the molten state. Optional other additives of the composition, as described above, may be mixed with the abovementioned components.

The hot-melt adhesive composition of the present invention may be produced using any of the techniques known in the art. Preferably, the step of mixing is carried out at a temperature of from 130 to 160°C. The components are preferably mixed for at least several hours, typically at least 2 hours, and preferably from 2 to 4 hours.

The hot-melt adhesive composition of the present invention can be prepared under air atmosphere, or preferably under inert atmosphere e.g. under carbon dioxide or nitrogen to limit potential degradation by oxidative reactions.

According to preferred embodiments, the process for preparing the hot-melt adhesive composition according to the invention comprises:
i) mixing the tackifying resin, wax and optional antioxidant in a reactor at a temperature of 130 to 160 °C at least for a period of time long enough, e.g., 1.5 to 3 hours,
ii) adding the ethylene-based copolymer into the mixture obtained in the previous step under stirring and heating at a temperature ranging from 130°C to 160°C, at least for a period of time long enough, for example 1 to 3 hours to melt all the ethylene-based copolymer,
iii) adding the modified castor oil into the mixture obtained in the previous step under stirring and heating at a temperature ranging from 130°C to 160°C, e.g. for 15 min to 1 hour, until all the components are melted and well mixed.

Other useful optional additives which may be present in the composition according to the invention, as described above, may be added at any step of the process according to the invention.

The crude composition could be further filtered, pelletization and dehydration based on any of the techniques known in the art to form the final hot-melt adhesive composition.

### The hot-melt adhesive composition

In a preferred embodiment, the hot-melt adhesive composition comprises, based on the total weight of the composition:
25 to 55 wt%, preferably 30 to 50 wt% of the ethylene-based copolymer,
20 to 60 wt%. preferably 30 to 50 wt% of the tackifying resin,
8 to 25 wt%, preferably 11 to 19 wt% of the modified castor oil,
1 to 15 wt%, preferably 2 to 10 wt% of the wax,
0 to 10, preferably 0.1 to 5 wt% of the additives.

In another embodiment, the composition according to the invention consists essentially of the ingredients mentioned above. By "consisting essentially", it is intended that said composition comprises less than 5 % by weight of ingredients other than the aforementioned ingredients, relative to the total weight of said composition, preferably less than 2% by weight, even more preferably less than 1% by weight.

The ingredients of this embodiment and their particular contents are as described above, including the embodiments and preferred features.

The hot-melt adhesive composition according to the invention may have a viscosity of 2000 to 7000 cps, preferably, 2500 to 4000 cps at 160°C according to ASTM D3236-15.

The hot-melt adhesive composition according to the invention may have an open time of 15 to 40 s, preferably 20 to 30 s.

The hot-melt adhesive composition according to the invention has preferably a high bio-based content of more than 42%, more preferably more than 45%, even more preferably more than 50%, e.g., 50, 55, 60, 65, 70%.

### Article and use

The invention also relates to an article comprising at least one substrate and a hot-melt adhesive composition according to the invention.

Preferably, the substrate may be a fiber, more preferably a plant fiber, most preferably, a plant fiber for use in producing paper, including but not limited to fibers derived from conifers, hardwoods, herbs, bast fibers, etc., such as larch, red pine, horsetail pine, Yunnan pine, poplar, birch, eucalyptus, reed, bamboo, manzanita stalks, straw, rice straw, lobelia, sorghum stalks, bagasse, flax, jute, cotton, etc.

According to a preferred embodiment, the composition according to the invention bonds at least two substrates of the article according to the invention. The at least two substrates may be joined adhesively by a layer of the composition according to the invention, in sandwich between the two substrates.

Preferably, the article is a paper product, e.g., book, calendar, cardboard, etc., preferably book.

The invention also relates to use of the hot-melt adhesive composition according to the invention for book binding, preferably as spine adhesive for book binding.

The invention also relates to use of the hot-melt adhesive composition according to the invention for coating a surface, wherein the surface is a fiber, preferably a fiber for use in producing paper. The preferable fiber is as described above.

Application methods are generally classified into contact application and noncontact application, e.g., slot coater coating, roll coater coating, control seam coating, slot spray coating, curtain spray coating, dot coating, bead coating and the like. The method of applying the hot-melt adhesive composition is not particularly limited here, as long as the intended product can be obtained.

### Beneficial effects

The hot-melt adhesive composition according to the invention has advantageously a high bio-based content while still maintaining suitable softening point and adhesion properties. It also has advantageously desired open time and viscosity, which is convenient in processing and application. The preferable hot-melt adhesive composition has advantageously lower application temperature which contributes to a lower energy consumption.

The following examples illustrate the invention without limiting it.

### EXAMPLES

The present invention will be described below by way of Examples and Comparative Examples. However, the present invention is not limited to these Examples as long as the present invention does not depart from the scope of the present invention.

### Testing methods:

### Viscosity:

The viscosity was measured according to ASTM D3236-15 by a Brookfield DV2T viscometer using 21# spindle. The viscosity was recorded after 15 min at setting temperature accordingly.

### Softening point:

The softening point was tested according to ASTM E-28-2018.

Specifically,
1) the hot-melt adhesive composition was sufficient melted, put into the copper ring, and cooled for 24 hours in room temperature,
2) put the sample ring on the support rack, placed the steel ball, then placed them into the pure glycerinum,
3) Started test, the result would be recorded when the falling of the ball was detected.

### Application temperature:

Application temperature refers to the minimum temperature that the adhesive composition could be well melted and applied uniformly when it is used in book binding application.

Bio-based content: In the examples, it was calculated by the sum of the weight percentage of hydrogenated castor oil (HCO) and KOMOTACOKB100S in the hot-melt adhesive composition.

### Adhesion:

The adhesion could be detected as follows:
1). Prepared carton substrates, cut them to standard size 45mm × 75mm. Selected adhesion zone of the cartons if the adhesion zone was different from other area.
2). Put enough adhesive composition in glue gun at standard operational temperature according to each adhesive composition, chose 1mm-1.5mm nozzle, and melted for 30min.
3). Applied adhesive bead on standard pieces, the outside of the carton, the adhesive line should be about 3 gram per linear meter, about 40mm long.
4). Put another piece quickly after the glue applying to make sure inner side of the carton contact with adhesive composition. Pression with 1 kg weight was performed for about 3 seconds. At least 3 test specimens were prepared.
5). After cooling for 2 hours in room temperature, the specimen was peeled off quickly (within 1 second). Then the fiber tear percentage on adhesives surface was observed. Recorded the average value for three specimens.

### Open time:

1. Melted the hot-melt adhesive compositions (glue) at required temperature for 30 min.
2. Applied 3g/m glue bead on 25cm × 50mm standard corrugated paper, and pressed another piece at 1 second interval with 1kg weight. Prepared as many specimens from 1 second interval to 10 or 15 seconds interval. Peeling off was performed to check fiber tear rate after 1 min.
3. The fiber tear rate would decrease with longer intervals. Record the interval time as open time when fiber tear was over 80%.

### Raw materials

Raw materials of the hot-melt adhesive compositions used in Examples and Comparative Examples are shown in Table 1 below.

**Table 1**

| Raw Material | Supplier | Detailed information |
|---|---|---|
| Escorene^{™} Ultra UL40028CC | ExxonMobil | EVA, with the melting index of 400 g/10 min, vinyl acetate content of 28 wt% |
| Escorene^{™} Ultra FL00728CC | ExxonMobil | EVA, with the melting index of 7 g/10 min, vinyl acetate content of 27.5 wt% |
| KOMOTAC^{®}KB100S | Guangzhou KOMO Chemicals CO., LTD. / Guangzhou KOMO CO., LTD. | Rosin ester with glycerol 100% bio-based |
| | | Softening point of 98 to 106 °C |
| HM-1000 | Henghe Materials & Science Technology Co., Ltd. | C9 hydrogenated hydrocarbon resin |
| Hydrogenated castor oil (HCO) | Guangzhou Panyu Zhongxin Oil Chemical CO., LTD | iodine value < 2.5, |
| | | acid value of 1.71 |
| | | OH value of 162.5 |
| | | saponification value of 179 |
| | | hydrogenated degree 98%, |
| | | being solid (25°C) |
| | | melting point of 85-87°C |
| | | 100% bio-based |
| Fully refined paraffin wax 64/66 | Fushun new-mainland trading CO., LTD | Paraffin wax, |
| | | Melting point of 64 °C |
| Refined Fischer-Tropsch Wax WL-115 | Shaanxi future cleaning chemicals CO., LTD. | FT-wax, |
| | | Melting point of 95-115 °C |
| CHINOX^{®} 1010 | Double Bond Chemical Ind. Co., Ltd. | Antioxidant |

The adhesive compositions of Examples and Comparative Examples were prepared as follows with the amount of the raw materials listed in Table 2:
The tackifying resin, wax, antioxidant, EVAs and modified castor oil were added in order into the reactor. The temperature was controlled as 140 to 150 °C, and stirring was performed for 3 h to obtain the crude product. The crude product was filtered, pelletization and dehydration were performed subsequently to form the hot-melt adhesive composition.

**Table 2**

| (wt%) | E1 | E2 | E3 | E4 | E5 | E6 | CE1 | CE2 | CE3 |
|---|---|---|---|---|---|---|---|---|---|
| ESCORENE^{™} ULTRA HEVA UL40028CC | 37.5 | 37.5 | 31.5 | 37.5 | 39.5 | 33.5 | 37.5 | 37.5 | 37.5 |
| ESCORENE^{™} ULTRA FL00728CC | 4 | 4 | 10 | 4 | 2 | 4 | 4 | 4 | 4 |
| KOMOTACOKB100S | 40 | 40 | 40 | 40 | 40 | 40 | 40 | 40 | 20 |
| HM-1000 | | | | | | | | | 20 |
| Hydrogenated castor oil (HCO) | 13 | 9 | 13 | 15 | 13 | 18 | 0 | 18 | 13 |
| Fully refined paraffin wax 64/66 | 3 | 9 | 3 | 2 | 3 | 2 | 18 | 0 | 3 |
| Refined Fischer-Tropsch Wax WL-115 | 2 | | 2 | 1 | 2 | 2 | | | 2 |
| CHINOX^{®} 1010 | 0.5 | 0.5 | 0.5 | 0.5 | 0.5 | 0.5 | 0.5 | 0.5 | 0.5 |

The testing results are shown in Table 3.

**Table 3**

| | E1 | E2 | E3 | E4 | E5 | E6 | CE1 | CE2 | CE3 |
|---|---|---|---|---|---|---|---|---|---|
| Viscosity (150°C) cps | 4225 | 3730 | 8800 | 4300 | 3800 | 3000 | 2900 | 4650 | 4180 |
| Viscosity (160°C) cps | 3140 | 2740 | 6000 | 3200 | 2700 | 2100 | 2183 | 3440 | 3058 |
| Softening point °C | 81.2 | 75.9 | 82 | 81 | 80 | 79 | 72.1 | 81.1 | 81.7 |
| Application temperature °C | 150 | | 160-170 | 150 | 150 | 150 | | | |
| Bio-based content | 53% | 49% | 53% | 55% | 53% | 58% | 40% | 58% | 33% |
| Adhesion | 100% | 100% | 100% | 100% | 100% | 100% | 100% | 100% | 100% |
| Open time /second | 25 | 35 | 23 | 29 | 28 | 26 | 23 | 45 | 23 |

As is shown in Tables 1 and 2, the hot-melt adhesive composition of E1, E4, E5, E6, with a bio-based content of higher than 50%, has suitable softening point, application temperature and desired open time for application. The composition of E1, E4, E5, E6, with a preferable ratio of EVAs than E3, has a better viscosity for application, as well as a lower application temperature which would contribute to a lower energy consumption. The composition of E1, E4, E5, E6, with a preferable ratio of hydrogenated castor oil to wax, has relatively lower open time compared with E2 and thus also facilitates application. The compositions of CE1 and CE3, could not reach the bio-based content of more than 50%. The composition of CE2, without adding wax, has a much high open time, which would result in adhesive sticking to the knife during subsequent cuts and thus is not favorable in the book binding application.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A hot-melt adhesive composition comprising:
(a) an ethylene-based copolymer,
(b) a tackifying resin,
(c) a modified castor oil,
(d) a wax,
(e) optional additives,
wherein
the modified castor oil is characterized as being solid at 25°C,
the modified castor oil contains hydrogenated castor oil,
the ethylene-based copolymer is a copolymer of ethylene and carboxylic acid ester having an ethylenic double bond, and
the hot-melt adhesive composition has a bio-based content of more than 42%, preferably more than 45%, more preferably more than 50%.

2. The hot-melt adhesive composition according to claim 1, wherein the carboxylic acid ester having an ethylenic double bond is selected from vinyl acetate, butyl acrylate and their combination.

3. The hot-melt adhesive composition according to claim 1 or 2, wherein
the ethylene-based copolymer is ethylene-vinyl acetate copolymer (EVA),
the EVA contains a first EVA and a second EVA,
the first EVA has a melting index of 200 to 600 g/10min, preferably 300 to 500 g/10 min, and
the second EVA has a melting index of 1 to 50 g/10min, preferably 3 to 25 g/10 min.

4. The hot-melt adhesive composition according to claim 2 or 3, wherein the content of vinyl acetate in the ethylene-based copolymer is 15 to 45 wt%, preferably 20 to 38 wt%.

5. The hot-melt adhesive composition according to claim 3 or 4, wherein the weight ratio of the first EVA to the second EVA is 3.5 to 22, preferably 5 to 20.

6. The hot-melt adhesive composition according to any of claims 1 to 5, wherein the tackifying resin is a biobased tackifying resin, preferably rosin and its derivatives.

7. The hot-melt adhesive composition according to any one of claims 1 to 6, wherein :
the modified castor oil contains more than 90 wt%, preferably 95 wt%, more preferably 100 wt% of the hydrogenated castor oil based on the total weight of the modified castor oil, and/or
the hydrogenated castor oil is solid at 25°C, and/or
the melting point of the hydrogenated castor oil is 65 to 110 °C, preferably 75 to 100 °C, more preferably 80 to 95 °C.

8. The hot-melt adhesive composition according to any one of claims 1 to 7, wherein the wax contains paraffin wax and Fischer-Tropsch wax (FT wax).

9. The hot-melt adhesive composition according to claim 8, wherein the hot-melt adhesive composition has one or more of the following features:
the melting point of the hydrogenated castor oil is between the melting point of the paraffin wax and the FT wax,
the melting point of the paraffin wax is 50 to 95 °C, preferably 55 to 80°C, more preferably 60 to 70°C,
the melting point of FT wax is 70 to 140 °C, preferably 80 to 130°C, more preferably 90 to 120°C,
the weight ratio of paraffin wax to FT wax is 0.1 to 10, preferably 0.5 to 5,
the weight ratio of the hydrogenated castor oil to the wax is more than 0.9, preferably 1.2 to 10, more preferably 2 to 6.

10. The hot-melt adhesive composition according to any of claims 1 to 9, wherein
the hydrogenated castor oil has a hydrogenated degree of more than 85%, preferably more than 90%, more preferably more than 95%, and/or
the hydrogenated castor oil has an iodine value of less than 2.5, and/or based on the total weight of the hot-melt adhesive composition, the hot-melt adhesive composition contains 8 to 25 wt%, preferably 11 to 19 wt% of the modified castor oil.

11. The hot-melt adhesive composition according to any of claims 1 to 10, wherein the hot-melt adhesive composition comprises, based on the total weight of the composition:
25 to 55 wt%, preferably 30 to 50 wt% of the ethylene-based copolymer,
20 to 60 wt%. preferably 30 to 50 wt% of the tackifying resin,
8 to 25 wt%, preferably 11 to 19 wt% of the modified castor oil,
1 to 15 wt%, preferably 2 to 10 wt% of the wax,
0 to 10, preferably 0.1 to 5 wt% of the additives.

12. Use of the hot-melt adhesive composition of any of claims 1 to 11 for coating a surface, wherein the surface is a fiber, preferably a fiber for use in producing paper.

13. Use of the hot-melt adhesive composition of any of claims 1 to 12 for book binding, preferably as book spine adhesive for book binding.

14. An article comprising at least one substrate and a hot-melt adhesive composition of any one of claims 1 to 11.

15. The article of claim 14, wherein
the substrate is a fiber, preferably a fiber for use in producing paper, and/or
the article is a paper product, preferably a book.
